# EUROPEAN PATENT APPLICATION

(11) **EP 4 757 100 A1**
(43) Date of publication of application: **10.06.2026**
(21) Application number: 24217604.8
(22) Date of filing: 04.12.2024
(51) Int. Cl.: H02J 3/36

(54) **ELECTRICAL SYSTEM FOR USE IN HIGH VOLTAGE DIRECT CURRENT MULTITERMINAL SWITCHING STATION**

(71) Applicant: GE Vernova Technology GmbH, 5400 Baden (CH)
(72) Inventor: KIRRAGE, Euan, Stafford, ST16 1WS (GB)
(74) Representative: Openshaw & Co.

(57) **Abstract**

An electrical system (300) comprising: a first busbar (302a); a second busbar (302b); a resistor module (306) comprising one or more resistors, the resistor module (306) being electrically coupled between the first busbar (302a) and the second busbar (302b); a first switching element (307), the first switching element (307) being electrically coupled between the first busbar (302a) and the second busbar (302b), the first switching element (307) being in series with the resistor module (306); and a plurality of power transmission media (304); wherein each power transmission medium (304) of the plurality of power transmission media (304) is electrically coupled to the first busbar (302a) via a respective second switching element (308); and each power transmission medium (304) of the plurality of power transmission media (304) is electrically coupled to the second busbar (302b) via a respective third switching element (310).

## Description

### Field

The subject matter herein relates generally to electrical systems for use in High Voltage Direct Current (HVDC) multi terminal switching stations (MTSS).

### Introduction

In recent years, the development of high-voltage direct current (HVDC) transmission systems has increasingly shifted towards multi-terminal configurations, where multiple HVDC schemes are interconnected. Such multi-terminal HVDC systems typically require the implementation of multi-terminal switching stations (MTSS), which serve as hubs for selectively connecting or disconnecting individual HVDC schemes.

When integrating a power transmission medium (e.g. an HVDC cable) into an active system, particularly when the power transmission medium has been previously grounded, it is typically necessary to first charge the power transmission medium before it can be connected. To control the inrush current during this charging process, a pre-insertion resistor (PIR) is typically employed. The PIR limits current flow as the power transmission medium is charged from the MTSS. Similarly, when an HVDC converter is brought online and connected to the MTSS, charging via a PIR is typically performed, even in cases where there is minimal distance between the HVDC converter and the switching station.

In scenarios where a power transmission medium must be de-energized, for example during maintenance or fault clearance, the power transmission medium must be discharged safely. While this function is often performed by the dynamic braking system (DBS), there are situations where the DBS cannot be utilized. In such cases, the PIR used for charging can also be adapted for discharging, provided it is appropriately rated and equipped with the necessary earthing switches to handle the discharge operation.

### Summary

HVDC schemes are being considered for use in urban areas, and to connect to offshore wind farms which may be accessible only by floating offshore platforms. As such, the weight and volumes of converter stations and switching stations may be subject to more stringent constraints than at present. The present inventors have realised that this may lead to use of gas-insulated switchgear (GIS) in some HVDC schemes, for example in place of air-insulated switchgear (AIS). The present inventors have further realised that the need to disperse the heat generated during charging or discharging via a PIR may preclude the inclusion of the PIR device within the GIS itself.

It is desirable to provide an electrical system, e.g. an MTSS, that mitigates these issues.

According to a first aspect, there is provided an electrical system comprising: a first busbar; a second busbar; a resistor module comprising one or more resistors, the resistor module being electrically coupled between the first busbar and the second busbar; a first switching element, the first switching element being electrically coupled between the first busbar and the second busbar, the first switching element being in series with the resistor module; and a plurality of power transmission media. Each power transmission medium of the plurality of power transmission media is electrically coupled to the first busbar via a respective second switching element. Each power transmission medium of the plurality of power transmission media is electrically coupled to the second busbar via a respective third switching element.

The resistor module may comprise: a plurality of resistors; and a plurality of switching elements, each switching element of the plurality of switching elements being electrically coupled to one or more of the resistors. The plurality of resistors may be selectively connectable in series or in parallel configurations via the plurality of switching elements.

The resistor module may comprise: a first terminal electrically coupled to the first busbar; and a second terminal electrically coupled to the second busbar. The electrical system may further comprise a fourth switching element electrically coupled to the first terminal. The first terminal may be configured to be selectively connected to ground through the fourth switching element.

The resistor module may comprise: a first terminal electrically coupled to the first busbar; and a second terminal electrically coupled to the second busbar. The electrical system may further comprise a fifth switching element electrically coupled to the second terminal. The second terminal may be configured to be selectively connected to ground through the fifth switching element.

Each power transmission medium of the plurality of power transmission media may comprise a respective terminal electrically coupled to the first busbar. The electrical system may further comprise a plurality of sixth switching elements. For each power transmission medium of the plurality of power transmission media, the terminal of that power transmission medium may be configured to be selectively connected to ground through a respective sixth switching element.

The first busbar may comprise a first busbar terminal. The electrical system may further comprise a seventh switching element electrically coupled to the first busbar terminal. The first busbar terminal may be configured to be selectively connected to ground through the seventh switching element.

The electrical system may further comprise: a further resistor module comprising one or more further resistors, the further resistor module being electrically coupled between the first busbar and the second busbar; and a further switching element, the further switching element being electrically coupled between the first busbar and the second busbar, the further switching element being in series with the further resistor module.

The electrical system may further comprise an enclosure. The first busbar, the second busbar, each first switching element, and each second switching element may be enclosed in the enclosure. The resistor module may be outside the enclosure. The enclosure may house a gas-insulated switchgear (GIS) system.

The electrical system may be a multi-terminal switching station, MTSS. The electrical system may be a high voltage direct current, HVDC, MTSS.

In a further aspect, there is provided a first method of operating the electrical system of any preceding aspect. The first method is for charging a first power transmission medium of the plurality of power transmission media. The first method comprises: opening the sixth switching element of the first power transmission medium; opening the fifth switching element; opening the fourth switching element; closing the first switching element; and closing the third switching element of the first power transmission medium whereby to charge the first power transmission medium via the resistor module.

The first method may further comprise: closing the second switching element of the first power transmission medium; opening the third switching element of the first power transmission medium; and opening the first switching element.

The first method may further comprise: closing the fourth switching element and/or closing the fifth switching element.

In a further aspect, there is provided a second method of operating the electrical system of any preceding aspect. The second method is for discharging a first power transmission medium of the plurality of power transmission media. The second method comprises: closing the fourth switching element; isolating the first power transmission medium from the first and second busbars by opening the second switching element and the third switching element of the first power transmission medium; opening the fifth switching element; and closing the third switching element of the first power transmission medium whereby to discharge the first power transmission medium to ground via the resistor module.

The second method may further comprise: closing the sixth switching element of the first power transmission medium; opening the third switching element of the first power transmission medium; and closing the fifth switching element.

In a further aspect, there is provided a third switching element method of operating the electrical system of any preceding aspect. The third method is for electrically isolating a first power transmission medium of the plurality of power transmission media from the first and second busbars. The third method comprises: opening the second switching element of the first power transmission medium; and opening the third switching element of the first power transmission medium.

In a further aspect, there is provided a fourth method of operating the electrical system of any preceding aspect. The fourth method is for electrically isolating the first busbar. The fourth method comprises: opening each second switching element; opening each third switching element; and, with the second and third switching elements open, closing the seventh switching element whereby to connect the first busbar to ground.

It will be appreciated that particular features of different aspects share the technical effects and benefits of corresponding features of other aspects of the invention.

It will also be appreciated that the use of the terms "first" and "second", and the like, are merely intended to help distinguish between similar features and are not intended to indicate a relative importance of one feature over another, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### Brief description of the drawings

Embodiments of the invention will now be described by way of example only and with reference to the accompanying drawings, in which:

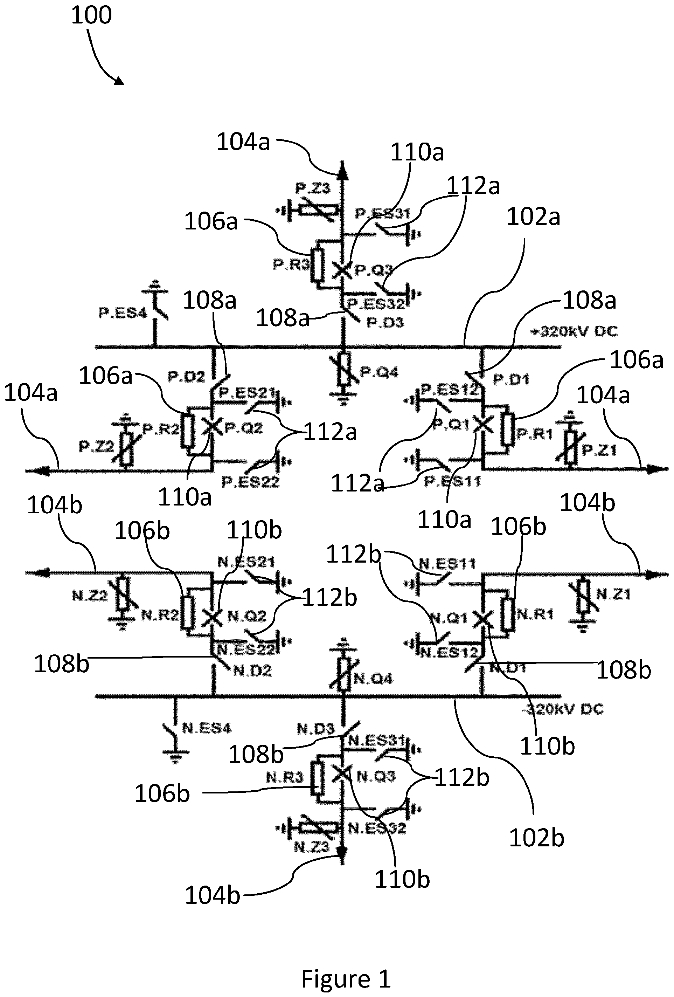

Figure 1 is a schematic illustration showing a first example of a conventional electrical system;
Figure 1 is a schematic illustration showing a second example of a conventional electrical system;
Figure 3 shows an electrical system for use in a HVDC MTSS;
Figure 4 shows a first table illustrating a bay discharging process for the electrical system;
Figure 5 shows a second table illustrating a bay charging process for the electrical system;
Figure 6 showing a third table illustrating a bay isolation process for the electrical system; and
Figure 7 shows a fourth table illustrating a busbar isolation process for the electrical system.

### Detailed description

Figure 1 is a schematic illustration showing a first example of a conventional electrical system 100 for use in a MTSS. The first electrical system 100 is useful in understanding the present invention. Further details on the first electrical system 100 can be found in *SHE Transmission, D15.1 Recommendations for Specifying DC GIS Systems, PROMOTioN - Progress on Meshed HVDC Offshore, 2018,* the contents of which are incorporated herein by reference.

In this example, the first electrical system 100 comprises two busbars, namely a first busbar 102a for a positive pole of the system, and a second busbar 102b for a negative pole of the system.

The first electrical system 100 further comprises a plurality of power transmission media 104a, 104b (e.g., feeds for HVDC converters, or HVDC cables). Each of the power transmission media 104a, 104b is coupled to the first or second busbars 102a, 102b via a respective PIR 106a, 106b, a respective first switching element 108a, 108b, and a respective second switching element 110a, 110b.

For each power transmission medium 104a, 104b, a respective first switching element 108a, 108b is electrically coupled in series between that power transmission medium 104a, 104b and the busbar 102a, 102b to which that power transmission medium 104a, 104b is coupled. For each power transmission medium 104a, 104b, a respective first switching element 108a, 108b is arranged to switchably connect or disconnect that power transmission medium 104a, 104b to or from the busbar 102a, 102b to which that power transmission medium 104a, 104b is coupled.

For each power transmission medium 104a, 104b, a respective PIR 106a, 106b is electrically coupled in series between that power transmission medium 104a, 104b and the busbar 102a, 102b to which that power transmission medium 104a, 104b is coupled. Each PIR 106a, 106b is arranged in parallel with a respective one of the second switching elements 110a, 110b. The second switching element 110a, 110b is arranged to switchably bypass the PIR 106a, 106b, or connect the PIR 106a, 106b in series between the power transmission medium 104a, 104b and the busbar 102a, 102b.

In this example, the first example electrical system 100 further comprises a plurality of earthing switches 112a, 112b. A respective pair of earthing switches 112a, 112b are coupled to each PIR 106a, 106b, one to either side of that PIR 106a, 106b. Each earthing switch 112a, 112b is arranged to switchably connect or disconnect the terminal of the PIR 106a, 106b to which it is connected to or from ground. The earthing switches 112a, 112b can be used both to allow safe maintenance of the PIRs 106a, 106b while the MTSS is operational with the hub busbar 102a, 102b at high voltage, and also to provide a grounding circuit for discharging the power transmission media 104a, 104b via the PIRs 106a, 106b.

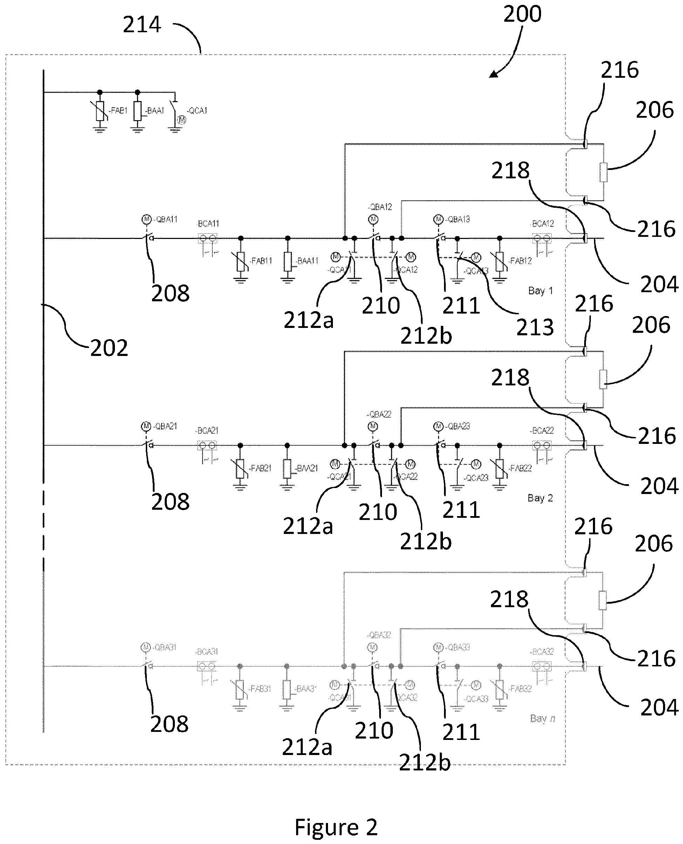

Figure 2 is a schematic illustration showing a second example of a conventional electrical system 200 for use in a MTSS. The second electrical system 200 is useful in understanding the present invention.

In this example, the second electrical system 200 comprises a busbar 202, and a plurality of power transmission media 204 (e.g., feeds for HVDC converters, or HVDC cables). Each of the power transmission media 204 is coupled to the busbar 202 via a respective PIR 206, a respective first switching element 208, a respective second switching element 110, and a respective third switching element 211.

The second electrical system 200 has a similar configuration to the first electrical system 100.

For each power transmission medium 204, a respective first switching element 208 is electrically coupled in series between that power transmission medium 204 and the busbar 202. For each power transmission medium 204, a respective first switching element 208 is arranged to switchably connect or disconnect that power transmission medium 204 to or from the busbar 202. In this example, a first switching element 208 is connected in series between the busbar 202 and a second switching element 210.

For each power transmission medium 204, a respective PIR 206 is electrically coupled in series between that power transmission medium 204 and the busbar 202. Each PIR 206 is arranged in parallel with a respective one of the second switching elements 210. The second switching element 210 is arranged to switchably bypass the PIR 206 or connect the PIR 206 in series between the power transmission medium 204 and the busbar 202. In this example, a second switching element 210 is connected in series between a first switching element 208 and a third switching element 211.

For each power transmission medium 204, a respective third switching element 211 is electrically coupled in series between that power transmission medium 204 and the busbar 202. In this example, a third switching element 211 is connected in series between a second switching element 210 and a power transmission medium 204. The third switching elements 211 and the first switching elements 208 may be used to electrically isolate a PIR 206 connected therebetween from the busbar 202 and power transmission medium 204 for safety during PIR maintenance.

In this example, the second example electrical system 200 further comprises a plurality of earthing switches 212a, 212b. A respective pair of earthing switches 212a, 212b are coupled to each second switching element 210, one to each side of the second switching element 210. Specifically, a first earthing switch 212a is connected to a first terminal at a first side of the second switching element 210, and a second earthing switch 212b is connected to a second terminal at a second side of the second switching element 210. The first earthing switch 212a is at the same side of the second switching element 210 as the first switching element 208. The second earthing switch 212b is at the same side of the second switching element 210 as the third switching element 211. Each earthing switch 212a, 212b is arranged to switchably connect or disconnect the terminal of the second switching element 210 to which it is connected to or from ground.

In this example, the second electrical system 200 is implemented in a GIS application. In particular, the second electrical system 200 comprises a housing or enclosure 214 in which pressurized gas, typically sulfur hexafluoride (SF₆), is used as an insulating medium. This tends to allow the HVDC system to manage high voltages in limited spaces, which is particularly important in urban environments or offshore platforms.

In this example, the PIRs 206 are located outside the enclosure 214, i.e. outside the GIS. This is to facilitate dispersion of the heat generated during charging or discharging via a PIR 206, which may be difficult or impossible were the PIRs 206 located within the enclosure 214. In this example, the electrical connections that connect each PIR 206 to the electrical circuitry of the second electrical system 200 pass through the walls of the enclosure 214 via a respective pair of bushings 216. In other words, each PIR 206 is connected to the GIS using two bushings 216. A bushing may be an insulated conductor used to interface through a barrier (i.e., the enclosure 214), preventing or opposing electrical leakage or discharge. A bushing may be considered to be an interface or a gasket. The bushings 216 may create a gas-tight seal around the electrical connections that pass through the walls of the enclosure 214, thereby preventing or opposing leakage of gas from the GIS.

In this example, each power transmission medium 204 extends through a wall of the enclosure 214 via a respective further bushing 218. The further bushings 218 create a gas-tight seal around the power transmission media 204 that pass through the walls of the enclosure 214, thereby preventing or opposing leakage of gas from the GIS.

In this example, a given power transmission medium 204 may be charged from the busbar 202 by closing its first switching element 208 and its third switching element 211, but opening its second switching element 210. This connects the power transmission medium 204 to the busbar 202 via the PIR 206 to limit the current flow to the power transmission medium 204.

In this example, a given power transmission medium 204 may be discharged by opening its first switching element 208 and its third switching element 211 to disconnect the power transmission medium 204 from the busbar 202; opening the second switching element 210; closing the first earthing switch 212a; and thereafter closing the third switching element 211 thereby connecting the power transmission medium 204 to earth via the PIR 206.

The design of the second electrical system 200 uses a respective, separate PIR 206 for each of the power transmission media 204. If a new feed/power transmission medium is added to the station 200, a new PIR 206 would need to be included for that new power transmission medium 204.

Furthermore, three earthing switches and three disconnectors may be implemented for each feed to support the charging and discharging functionality of the circuit. Specifically, the second earthing switch 212b and the third switching element 211 may be used for isolation and maintenance. After discharging, the second earthing switch 212b may be closed to directly connect the feed to earth. The third switching element 211 may then be used to isolate the feed from the bay (e.g., for PIR maintenance), and so a further earthing switch 213 is closed to maintain a direct earth connection to the feed.

In a GIS system, such as the second electrical system 200 illustrated in Figure 2, at least two bushings are used to connect each external PIR 206 to the GIS.

What will now be described is an embodiment of an improved electrical system.

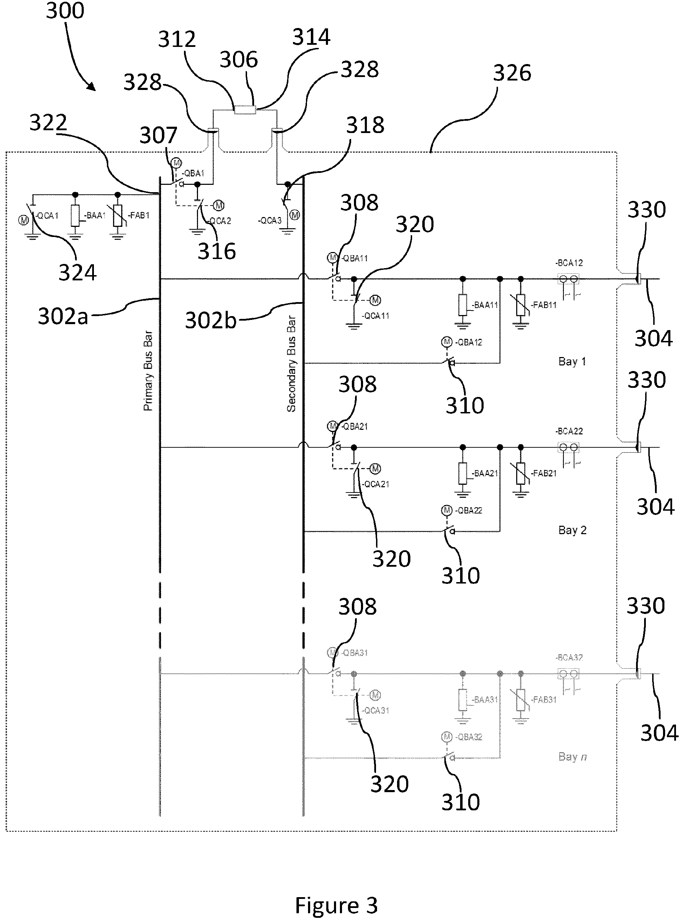

Figure 3 is a schematic illustration showing an embodiment of an electrical system 300. In this embodiment, the electrical system 300 is, or is for use in, a MTSS, specifically a HVDC MTSS. The MTSS may be of modular design in which, for example, new HVDC schemes can be connected via new bays without significant reworking of the original station.

In this example, the electrical system 300 comprises a first busbar 302a, a second busbar 302b and a plurality of power transmission media 304 (e.g., feeds for HVDC converters, or HVDC cables).

The electrical system 300 further comprises a resistor module 306 comprising one or more resistors, which in this embodiment are PIRs. The resistor module 306 is electrically coupled between the first busbar 302a and the second busbar 302b.

The electrical system 300 further comprises a first switching element 307, e.g. a first switch. The first switching element 307 is electrically coupled between the first busbar 302a and the second busbar 302b. The first switching element 307 is electrically connected in series with the resistor module 306 between the first busbar 302a and the second busbar 302b.

For each power transmission medium 304, a respective second switching element 308 (e.g., a second switch) is electrically coupled in series between that power transmission medium 304 and the first busbar 302a. The respective second switching element 308 is arranged to switchably connect or disconnect that power transmission medium 304 to or from the first busbar 302a.

For each power transmission medium 304, a respective third switching element 310 (e.g. a third switch) is electrically coupled in series between that power transmission medium 304 and the second busbar 302b. The respective third switching element 310 is arranged to switchably connect or disconnect that power transmission medium 304 to or from the second busbar 302b.

In some embodiments, the resistor module 306 comprises only a single resistor, i.e. a single PIR. However, in other embodiments, the resistor module 306 comprises a plurality of resistors (i.e. multiple PIRs) and a plurality of resistor module switches electrically coupled to the plurality of resistors. The plurality of resistors are selectively connectable in series or in parallel configurations via the plurality of resistor module switches. By controlling the resistor module switches, the configuration and overall resistance of the resistor module 306 may be varied. This advantageously tends to allow for feeds with different charging/discharging requirements (e.g., cables of significantly different length) to be charged/discharged. Also, this tends to allow multiple feeds to be charged/discharged simultaneously.

In some embodiments, the resistor module may comprise: a plurality of resistors; a plurality of switches, each electrically coupled to one or more of the resistors; and a control circuit operatively coupled to the switches. The plurality of resistors are selectively connectable in series or in parallel configurations via the plurality of switches. The control circuit is configured to dynamically switch one or more resistors in and out of the series or parallel configuration based on operational requirements, thereby allowing the total resistance of the resistor module to be adjusted. The control circuit enables selective engagement of individual resistors to provide a desired overall resistance in accordance with varying load conditions.

The resistor module 306 comprises a first terminal 312 electrically coupled to the first busbar 302a, and a second terminal 314 electrically coupled to the second busbar 302b.

In this embodiment, the electrical system 300 further comprises a fourth switching element 316 (e.g. a fourth switch) which is electrically coupled to the first terminal 312 of the resistor module 306. The fourth switching element 316 is an earthing switch connected between the first terminal 312 and ground.

In this embodiment, the electrical system 300 further comprises a fifth switching element 318 (e.g. a fifth switch) which is electrically coupled to the second terminal 314 of the resistor module 306. The fifth switching element 318 is an earthing switch connected between the second terminal 314 and ground.

In this embodiment, each power transmission medium 304 comprises a respective terminal electrically coupled to the first busbar 302a. The electrical system 300 further comprises a plurality of sixth switching elements 320 (i.e. sixth switches). For each power transmission medium 304, the terminal of that power transmission medium is configured to be selectively connected to ground through a respective sixth switching element 320. The sixth switching elements 320 are earthing switches, each being connected between a respective power transmission medium 304 and ground.

In this embodiment, the first busbar 302a comprises a first busbar terminal 322. The electrical system further comprises a seventh switching element 324 (e.g., a seventh switch) electrically coupled to the first busbar terminal 322. The seventh switching element 324 is an earthing switch connected between the first busbar terminal 322 and ground.

In this embodiment, the electrical system 300 is implemented in a GIS application. In particular, the electrical system 300 comprises a housing or enclosure 326 in which pressurized gas, typically sulfur hexafluoride (SF₆), is used as an insulating medium. This tends to allow the HVDC system to manage high voltages in limited spaces, which is particularly important in urban environments or offshore platforms.

In this embodiment, the resistor module 306 is located outside the enclosure 326, i.e. outside the GIS. This is to facilitate dispersion of the heat generated during charging or discharging via the resistor module 306, which may be difficult or impossible were the resistor module 306 located within the enclosure 326. The electrical connections that connect the resistor module 306 to the electrical circuitry of the electrical system 300 pass through the walls of the enclosure 326 via a pair of bushings 328. In other words, the resistor module 306 is connected to the GIS using two bushings 328. The bushings 328 may create a gas-tight seal around the electrical connections that pass through the walls of the enclosure 326, thereby preventing or opposing leakage of gas from the GIS.

In this embodiment, each power transmission medium 304 extends through a wall of the enclosure 326 via a respective further bushing 330. The further bushings 330 create a gas-tight seal around the power transmission media 304 that pass through the walls of the enclosure 326, thereby preventing or opposing leakage of gas from the GIS.

Thus, an embodiment of an electrical system 300 is provided.

Under a so-called "normal mode" of operation of the electrical system 300 when power is being supplied to the power transmission media 304 via the electrical system 300, each power transmission medium 304 is connected to the first busbar 302a and disconnected from the second busbar 302b. In particular, for a given power transmission medium 304, the second switching element 308 that connects that power transmission medium 304 to the first busbar 302a is closed, while the third switching element 310 that connects that power transmission medium 304 to the second busbar 302b is open. Also, the second busbar 302b is disconnected from the first busbar 302a by opening the first switching element 307. Also, in this embodiment, while not in use, the resistor module 306 is earthed by closing either or both of the fourth switching element 316 and the fifth switching element 318. The sixth switching element 320 is also open. The seventh switching element 324 is also open.

From this "normal mode", one or more of the power transmission media 304 may be discharged.

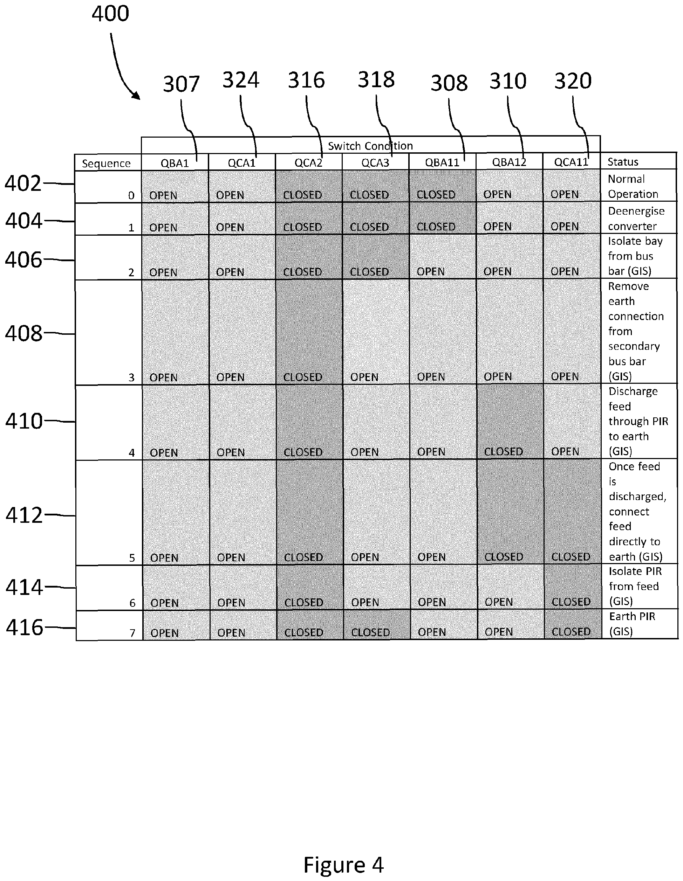

Figure 4 shows a first table 400 illustrating certain sequential process steps of an embodiment of a process of discharging a power transmission medium 304.

At step 402, the power transmission medium 304 is operated in "normal mode", with the second switching element 308 being closed and the third switching element 310 being open. The first switching element 307 is open. The fourth switching element 316 and the fifth switching element 318 are closed.

At step 404, the HVDC converter attached to the power transmission medium 304 is deenergized.

At step 406, the second switching element 308 is opened. This electrically isolates the power transmission medium 304 from the first busbar 302a.

At step 408, the fifth switching element 318 is opened. This removes the ground connection via the fifth switching element 318 of the second busbar 302b.

At step 410, the third switching element 310 is closed. This creates a path for current from the power transmission medium 304 to ground via the third switching element 310, the second busbar 302b, the resistor module 306 and the fourth switching element 316.

The power transmission medium 304 is thus discharged to ground via the resistor module 306. The resistor module 306 limits or restricts the discharging current flow from the power transmission medium 304.

Optionally, at step 412, the sixth switching element 320 is closed. The discharged power transmission medium 304 is thus connected to ground via the sixth switching element 320.

Optionally, at step 414, the third switching element 310 is opened. The resistor module 306 is thus electrically isolated from the power transmission medium 304. Step 414 tends to allow for the other bays to make use of the resistor module 306 and the second busbar 302b e.g. without affecting and/or being affected by the bay currently discharged/undergoing maintenance.

Optionally, at step 416, the fifth switching element 318 is closed. The resistor module 306 is thus earthed. Step 416 tends to enable or facilitate maintenance of the resistor module 306 (e.g. PIR maintenance).

Thus, an embodiment of a process of discharging a power transmission medium 304 is provided. In this embodiment, in order to discharge the power transmission medium 304, it is isolated from the first busbar 302a by opening the second switching element 308 before being discharged to ground via the resistor module 306 and the fourth switching module 316, by closing the third switching module 310. For this process, the third switching module 310 has current making capability. Because the resistance module 306 is disconnected from the first busbar 302a by the first switching element 307, this operation does not affect the other power transmission media 304 which are connected to the hub.

From a state where a given power transmission medium 304 is discharged, e.g. from the state of the electrical system 300 at step 416 of the process of Figure 4, that power transmission medium 304 may subsequently be charged.

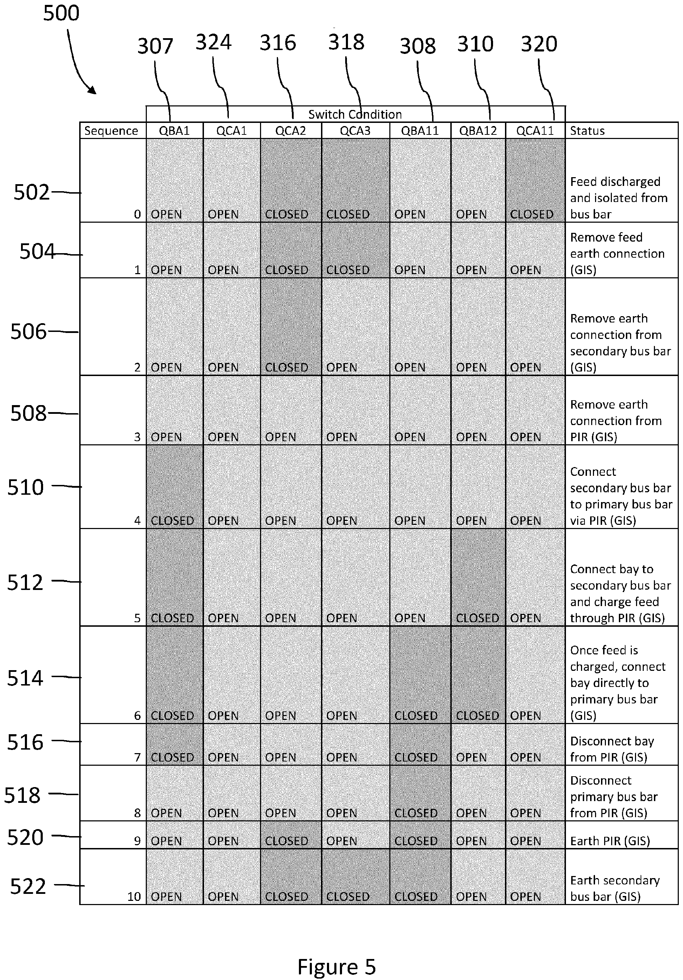

Figure 5 shows a second table 500 illustrating certain sequential process steps of an embodiment of a process of charging a power transmission medium 304.

At step 502, the power transmission medium 304 is in a discharged state and is isolated from the first and second busbars 302a, 302b. In particular, the second switching element 308 and the third switching element 310 are both open. The first switching element 307 is open. The seventh switching element 324 is open. The fourth switching element 316 and the fifth switching element 318 are closed. The sixth switching element 320 is closed.

At step 504, the sixth switching element 320 is opened. Thus, the ground connection of the power transmission medium 304 via the sixth switching element 320 is removed.

At step 506, the fifth switching element 318 is opened. Thus, the ground connection of the second busbar 302b via the fifth switching element 318 is removed.

At step 508, the fourth switching element 316 is opened. Thus, the ground connection of the resistor module 306 is removed.

At step 510, the first switching element 307 is closed. Thus, electrical connection between the first busbar 302a and the second busbar 302b via the resistor module 306 is established.

At step 512, the third switching element 310 is closed. Thus, the power transmission medium 304 is electrically connected to the second busbar 302b. Accordingly, the power transmission medium 304 is charged via the resistor module 306 and the secondary busbar 302b. The resistor module 306 limits or restricts the charging current flow to the power transmission medium 304.

Optionally, once the power transmission medium 304 is charged (e.g., fully charged, or charged to a threshold level), at step 514, the second switching element 308 is closed. This directly electrically connects the power transmission medium 304 to the primary busbar 302a.

Optionally, at step 516, the third switching element 310 is opened. This disconnects the power transmission medium 304 from the second busbar 302b and the resistor module 306.

Optionally, at step 518, the first switching element 307 is opened. This disconnects the first busbar 302a from the second busbar 302b and the resistor module 306.

Optionally, at step 520, the fourth switching element 316 is closed. This connects the resistor module 306 to ground via the fourth switching element 316. The resistor module 306 is thus earthed.

Optionally, at step 522, the fifth switching element 318 is closed. This connects the second busbar 302b to ground via the fifth switching element 318. The second busbar 302b is thus earthed. Advantageously, the second terminal 314 is earthed, meaning both terminals 312, 314 of the resistor module 306 are earthed for safe maintenance of the resistor module 306.

Advantageously, some or all of steps 514-522 tend to return the switching station to "normal mode". This may allow for maintenance of resistor module 306. This may also free-up the resistor module 306 for use by other feeds, etc.

Thus, an embodiment of a process of charging a power transmission medium 304 is provided. In this embodiment, the power transmission medium 304 is charged by connecting the first busbar 302a to the second busbar 302b via the resistor module 306 by closing the first switching element 307. Direct connection of the power transmission medium 304 to the first busbar 302a is broken by keeping the second switching element 308 open. All earth switches may be kept open, and the third switching element 310 may be closed to connect the power transmission medium 304 to the second busbar 302b and allow the first busbar 302a to charge it via the resistor module 306.

From the "normal mode", the first busbar 302a may be electrically isolated from the rest of the electrical system 300.

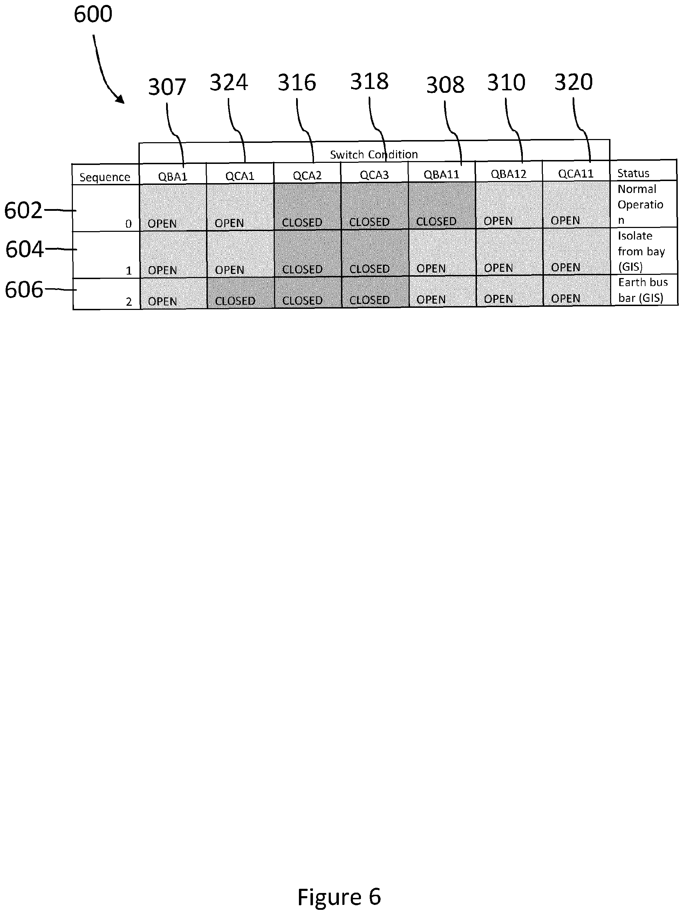

Figure 6 shows a third table 600 illustrating certain sequential process steps of an embodiment of a process of isolating the first busbar 302a.

At step 602, the power transmission medium 304 is operated in "normal mode", with the second switching element 308 being closed and the third switching element 310 being open. The first switching element 307 is open. The fourth switching element 316 and the fifth switching element 318 are closed.

At step 604, the second switching element 308 is opened. This electrically isolates the power transmission medium 304 from the first busbar 302a.

The first busbar 302a is thus electrically isolated from the power transmission medium 304 and the second busbar 302b.

All bays/feeds are isolated from the first busbar 302a in this way (i.e., by opening their respective second switching element 308). Alternatively, one or more bays/feeds are at least discharged/earthed.

At step 606, the seventh switching element 324 is closed. The first busbar 302a is thus connected to ground via the seventh switching element 324.

One or more of the power transmission media 304 could still be operating independently, and could also still discharge via the second busbar 302b, the resistor module 306 and the fourth switching element 316 while the first busbar 302a remains isolated and grounded.

Thus, an embodiment of a process of isolating the first busbar 302a is provided.

From the "normal mode", the power transmission medium 304 may be electrically isolated from the rest of the electrical system 300.

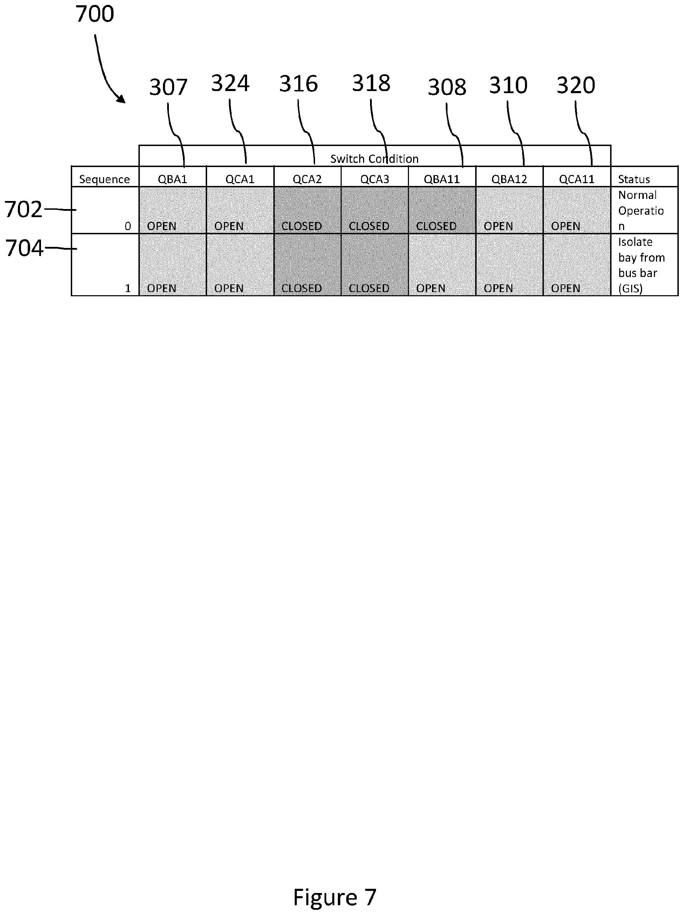

Figure 7 shows a fourth table 700 illustrating certain sequential process steps of an embodiment of a process of isolating the power transmission medium 304 from the GIS.

At step 702, the power transmission medium 304 is operated in "normal mode", with the second switching element 308 being closed and the third switching element 310 being open. The first switching element 307 is open. The fourth switching element 316 and the fifth switching element 318 are closed.

At step 704, the second switching element 308 is opened. This electrically isolates the power transmission medium 304 from the first busbar 302a. The power transmission medium 304 is thus isolated from both the first and second busbars 302a, 302b.

Thus, an embodiment of a process of isolating the power transmission medium 304 is provided.

The above-described electrical system 300 advantageously tends to provide for reduced complexity and a reduced number of components used for each feed/power transmission medium of the station compared to the conventional systems 100, 200. In particular, the electrical system may use a single common resistor module 306 (i.e. one or more PIRs) to individually charge or discharge any of the feeds 304. This tends to be achieved by using a second busbar 302b, which connects to the first busbar via the resistor module 306, a switching element 307, and the earthing circuits 316, 318.

Advantageously, by placing the resistor module 306, the first switching element 307, the fourth switching element 316, and the fifth switching element 318 between the first and second busbars 302a, 302b and sharing it as a common circuit between all power transmission media 304, a need for these components (i.e., the resistor module 306, the first switching element 307, the fourth switching element 316, and the fifth switching element 318) for each of the bays, i.e. for each individual power transmission medium, tends to be removed. This tends to reduce the overall component count.

Furthermore, at the cost of including these four components in the hub circuit, each subsequent power transmission medium added to the system tends to use two fewer earthing switches, one fewer current-making disconnector, and no additional PIRs.

Furthermore, the number of bushings in a GIS tends to be reduced.

Advantageously, in the above-described electrical system 300 opening the first switching element 307 tends to allow either the DC Hub or any of the power transmission media 304 to be isolated for maintenance while the other still operates.

For maintenance on a power transmission medium 304, the sixth switching element 320 can be closed and the second switching element 308 opened while the other power transmission media 304 and the hub continue to operate. (The third switching element 310 would be open too.)

For maintenance on the hub itself, the seventh switching element 324 can be used to earth the first busbar 302a while any of the power transmission media 304 continue to operate. All second switching elements 308 may be open for this.

Advantageously, the resistor module 306 (i.e., the PIR(s)) can be isolated from the power transmission media 304 and the hub, and connected to earth by the fourth and fifth switching elements 316, 318 for maintenance while the rest of the switching station continues to operate. If desired, a second disconnector could be placed on the right-hand side of the resistor module 306, i.e. between the second terminal 314 and the second busbar 302b, e.g. for added safety.

In the above embodiments, the electrical system comprises only a single resistor module and earthing circuit. In the above embodiments, this is connected between the first and second busbars. However, in other embodiments, one or more additional, or "backup", resistor modules and earthing circuits could be added in parallel to the first resistor module and earthing circuit. Such one or more additional resistor modules and earthing circuits would be connected between the first and second busbars. The one or more additional resistor modules and earthing circuits advantageously tend to reduce the risk of energy unavailability during maintenance.

In other words, in some embodiments, the electrical system may further comprise: a further resistor module comprising one or more further resistors, the further resistor module being electrically coupled between the first busbar and the second busbar; and a further switch, the further switch being electrically coupled between the first busbar and the second busbar, the further switch being in series with the further resistor module.

It will be appreciated that various other electrical components may be located at any particular location or with any particular feature/component in the example 100. These may include switches, transformers, resistors, reactors, surge arrestors, harmonic filters and other components well known in the art.

It will be appreciated that cables used as power transmission media may comprise the following non-limiting examples of crosslinked polyethylene (XLPE) and/or mass impregnated (MI) insulation cables. Such cables may comprise a conductor (such as copper or aluminium) surrounding by a layer of insulation. Dimensions of cables and their associated layers may be varied according to the specific application (and in particular, operational voltage requirements). Cables may further comprise strengthening or 'armouring' in applications such as subsea installation. Cables may further comprise sheaths/screens that are earthed at one or more locations. Power transmission media could refer to a busbar or similar, with no cable (e.g., a direct connection to a converter station).

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams and/or the schematic Tables in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. An electrical system comprising:
a first busbar;
a second busbar;
a resistor module comprising one or more resistors, the resistor module being electrically coupled between the first busbar and the second busbar;
a first switching element, the first switching element being electrically coupled between the first busbar and the second busbar, the first switching element being in series with the resistor module; and
a plurality of power transmission media; wherein
each power transmission medium of the plurality of power transmission media is electrically coupled to the first busbar via a respective second switching element; and
each power transmission medium of the plurality of power transmission media is electrically coupled to the second busbar via a respective third switching element.

2. The electrical system of claim 1, wherein the resistor module comprises:
a plurality of resistors; and
a plurality of switching elements, each switching element of the plurality of switching elements being electrically coupled to one or more of the resistors; wherein
the plurality of resistors are selectively connectable in series or in parallel configurations via the plurality of switching elements.

3. The electrical system of any preceding claim, wherein
the resistor module comprises:
a first terminal electrically coupled to the first busbar; and
a second terminal electrically coupled to the second busbar;
the electrical system further comprises a fourth switching element electrically coupled to the first terminal; and
the first terminal is configured to be selectively connected to ground through the fourth switching element.

4. The electrical system of any preceding claim, wherein
the resistor module comprises:
a first terminal electrically coupled to the first busbar; and
a second terminal electrically coupled to the second busbar;
the electrical system further comprises a fifth switching element electrically coupled to the second terminal; and
the second terminal is configured to be selectively connected to ground through the fifth switching element.

5. The electrical system of any preceding claim, wherein
each power transmission medium of the plurality of power transmission media comprises a respective terminal electrically coupled to the first busbar;
the electrical system further comprises a plurality of sixth switching elements; and
for each power transmission medium of the plurality of power transmission media, the terminal of that power transmission medium is configured to be selectively connected to ground through a respective sixth switching element.

6. The electrical system of any preceding claim, wherein
the first busbar comprises a first busbar terminal;
the electrical system further comprises a seventh switching element electrically coupled to the first busbar terminal; and
the first busbar terminal is configured to be selectively connected to ground through the seventh switching element.

7. The electrical system of any preceding claim, further comprising:
a further resistor module comprising one or more further resistors, the further resistor module being electrically coupled between the first busbar and the second busbar; and
a further switching element, the further switching element being electrically coupled between the first busbar and the second busbar, the further switching element being in series with the further resistor module.

8. The electrical system of any preceding claim, further comprising:
an enclosure; wherein
the first busbar, the second busbar, each first switching element, and each second switching element are enclosed in the enclosure; and
the resistor module is outside the enclosure.

9. The electrical system of claim 8, wherein the enclosure houses a gas-insulated switchgear, GIS, system.

10. The electrical system of any preceding claim, wherein the electrical system is a multi-terminal switching station, MTSS.

11. The electrical system of claim 10 wherein the electrical system is a high voltage direct current, HVDC, MTSS.

12. A method of operating the electrical system of any preceding claim when dependent on claims 3, 4 and 5, the method being for charging a first power transmission medium of the plurality of power transmission media, the method comprising:
opening the sixth switching element of the first power transmission medium;
opening the fifth switching element;
opening the fourth switching element;
closing the first switching element; and
closing the third switching element of the first power transmission medium whereby to charge the first power transmission medium via the resistor module.

13. A method of operating the electrical system of any preceding claim when dependent on claims 3 and 4, the method being for discharging a first power transmission medium of the plurality of power transmission media, the method comprising:
closing the fourth switching element;
isolating the first power transmission medium from the first and second busbars by opening the second switching element and the third switching element of the first power transmission medium;
opening the fifth switching element; and
closing the third switching element of the first power transmission medium whereby to discharge the first power transmission medium to ground via the resistor module.

14. A method of operating the electrical system of any of claims 1 to 11, the method being for electrically isolating a first power transmission medium of the plurality of power transmission media from the first and second busbars, the method comprising:
opening the second switching element of the first power transmission medium; and
opening the third switching element of the first power transmission medium.

15. A method of operating the electrical system of claim 6 or any claim dependent on claim 6, the method being for electrically isolating the first busbar, the method comprising:
opening each second switching element;
opening each third switching element; and
with the second and third switching elements open, closing the seventh switching element whereby to connect the first busbar to ground.
